# EUROPEAN PATENT SPECIFICATION

(11) **EP 3 620 952 B1**
(45) Date of publication and mention of the grant of the patent: **07.06.2023**
(21) Application number: 18794997.9
(22) Date of filing: 08.04.2018
(51) Int. Cl.: G06V 40/12, G06V 40/13, G06V 10/30

(54) **OPTICAL FINGERPRINT IDENTIFICATION METHOD, AND RELATED PRODUCT**
OPTISCHES FINGERABDRUCKIDENTIFIZIERUNGSVERFAHREN UND ENTSPRECHENDES PRODUKT
PROCÉDÉ D'IDENTIFICATION OPTIQUE D'EMPREINTES DIGITALES ET PRODUIT ASSOCIÉ

(30) Priority: 03.05.2017 CN 201710305567
(43) Date of publication of application: 11.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: ZHOU, Yibao, Dongguan Guangdong 523860 (CN)
(74) Representative: Mewburn Ellis LLP
(86) International application number: PCT/CN2018/082210
(87) International publication number: WO 2018/201847

(56) References cited:
- WO-A1-93/07584
- WO-A1-2015/185883
- CN-A- 101 383 002
- CN-A- 102 833 423
- CN-A- 102 833 423
- CN-A- 105 205 440
- CN-A- 105 956 535
- CN-A- 106 066 685
- CN-A- 107 239 737
- CN-U- 202 196 429

## Description

### TECHNICAL FIELD

This disclosure relates to the field of data transmission technologies, and more particularly to a method for optical fingerprint recognition and related products.

### BACKGROUND

With the popularity of mobile terminals such as smart phones, in modern life, almost everybody has a mobile phone. Currently, mobile phones generally adopt a fingerprint recognition technology, and fingerprint recognition can be used in various scenarios such as mobile terminal unlocking, mobile payment, and the like.

The optical fingerprint recognition technology is widely applied to a fingerprint recognition module of various mobile terminals because of its good stability and high recognition sensitivity. An optical fingerprint recognition module generally includes a light source and an optical fingerprint detection module. An imaging principle of optical fingerprint recognition is as follows: the light source emits lights; the lights pass through a surface of a display screen on which a finger is pressed and then are reflected to the optical fingerprint recognition module; the optical fingerprint recognition module receives and processes the lights reflected to obtain a fingerprint image. A principle of fingerprint comparison is as follows: the optical fingerprint recognition module compares the fingerprint image obtained with a pre-stored fingerprint image to obtain a comparison result.

However, since a user's finger may easily leave a fingerprint mark when pressing the surface of the display screen, and the residual fingerprint mark often affects a recognition result of the optical fingerprint recognition module, which results in deviation between a collected fingerprint image and a real fingerprint image, thereby reducing fingerprint matching success rate of the optical fingerprint recognition module.
CN 102833423 describes a touch screen mobile phone having fingerprint identification and a login unlocking method for the touch screen mobile phone. CN 105956535 discloses a fingerprint identification control method. CN 101383002 relates to a method for collecting and splicing a fingerprint, which can support rolling in any direction and is a method for identifying and processing a fingerprint picture. CN 106066685 discloses an unlock control method using a fingerprint identification module to determine if a fingerprint image matches with a fingerprint contrast processing result. CN 202196429 is a utility model relating to portable handheld electronic equipment having a fingerprint identification module.

### SUMMARY

The present invention is defined in the independent claims. According to embodiments of the present disclosure, a method for optical fingerprint recognition and related products are provided, which can improve success rate of fingerprint matching.

In a first aspect of the present disclosure, a method for optical fingerprint recognition is provided according to the steps of claim 1.

In a second aspect of the present disclosure, a device according to claim 5 is provided.

In a third aspect of the present disclosure, a computer-implemented storage medium according to claim 9 is provided. The device can be a mobile terminal which includes an AP, a touch display screen, an optical fingerprint recognition module having a fingerprint recognition area located in a first area of the touch display screen, a memory, and one or more programs stored in the memory and configured to be executed by the AP. The one or more programs comprising instructions configured to: collect fingerprint data of a user when the touch display screen detects a touch operation of the user in the first area and send the fingerprint data to the AP; obtain repaired fingerprint data by denoising the fingerprint data according to pre-collected noise data, where the pre-collected noise data is collected in advance by the optical fingerprint recognition module when there is no touch operation in the first area; and determine whether the repaired fingerprint data is matched with pre-stored fingerprint template data, and determine that fingerprint verification passes when the repaired fingerprint data is matched with the pre-stored fingerprint template data.

The device includes a collecting unit, a processing unit, a determining unit, and a verification unit. The collecting unit is configured to control the optical fingerprint recognition module to collect fingerprint data of a user when the touch display screen detects a touch operation of the user in the first area and send the fingerprint data to the AP. The processing unit is configured to obtain, with the AP, repaired fingerprint data by denoising the fingerprint data according to pre-collected noise data, where the pre-collected noise data is collected in advance by the optical fingerprint recognition module when there is no touch operation in the first area. The determining unit is configured to determine, with the AP, whether the repaired fingerprint data is matched with pre-stored fingerprint template data. The verification unit is configured to determine that fingerprint verification passes when the determining unit determines that the repaired fingerprint data is matched with the pre-stored fingerprint template data.

In an example not covered by the claims, a computer program product is also provided.
The computer program product includes a non-transitory computer readable storage medium which is configured to store computer programs, the computer programs are operable with a computer to execute part or all of the operations described in any method of the first aspect of the present disclosure.

According to an example not covered by the claims, before comparison of fingerprint data, the fingerprint data collected is denoised and repaired to obtain the repaired fingerprint data closer to a real fingerprint. According to the invention, the influence of the residual foreign material in the first area (fingerprint recognition area) of the touch display screen on the fingerprint data collected can be reduced, thereby facilitating the success of fingerprint matching.

### BRIEF DESCRIPTION OF THE DRAWINGS

In order to describe technical solutions of embodiments of the present disclosure or the related art more clearly, the following will give a brief description of accompanying drawings used for describing the embodiments of the present disclosure or the related art. Apparently, accompanying drawings described below are merely some embodiments of the present disclosure. Those of ordinary skill in the art can also obtain other accompanying drawings based on the accompanying drawings described below without creative efforts.
FIG. 1a is a schematic diagram illustrating a working principle of an optical fingerprint recognition module
FIG. 1b is a schematic structural diagram illustrating a mobile terminal
FIG. 1c is a schematic structural diagram illustrating a fingerprint recognition area
FIG. 2 is a schematic flowchart illustrating a method for optical fingerprint recognition
FIG. 3 is a schematic flowchart illustrating a method for optical fingerprint recognition
FIG. 4 is a schematic flowchart illustrating a method for optical fingerprint recognition
FIG. 5 is a schematic structural diagram illustrating a mobile terminal
FIG. 6 is a schematic structural diagram illustrating a device for optical fingerprint recognition
FIG. 7 is a schematic structural diagram illustrating a device for optical fingerprint recognition
FIG. 8 is a schematic structural diagram illustrating a mobile terminal

### DETAILED DESCRIPTION

The mobile terminal involved in the embodiments of the present disclosure may include various handheld devices, on-board devices, wearable devices, computing devices that have wireless communication functions, or other processing devices connected to a wireless modem, as well as various forms of user equipment (UE), mobile stations (MS), terminal devices, and the like. For convenience of description, the above-mentioned devices are collectively referred to as mobile terminals.

Hereinafter, embodiments of the present disclosure will be described in detail.

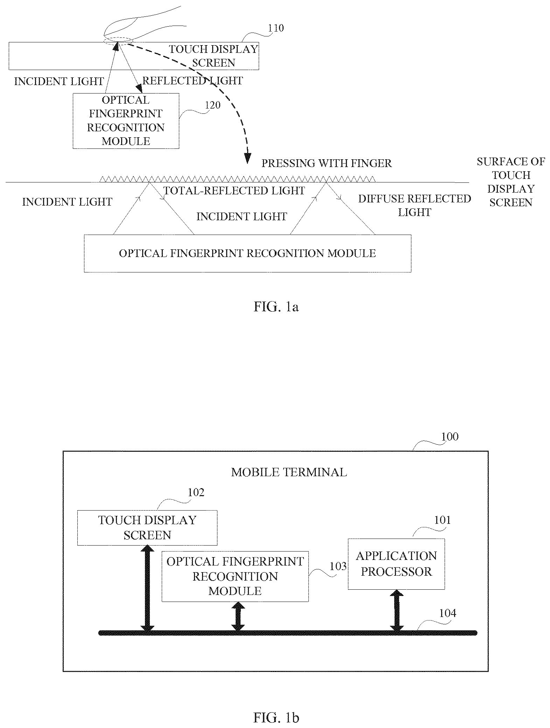

For a better understanding of embodiments of the present disclosure, a working principle of an optical fingerprint recognition module is introduced first. FIG. 1a is a schematic diagram illustrating a working principle of an optical fingerprint recognition module according to the present disclosure. As illustrated in FIG. 1a, a touch display screen 110 and an optical fingerprint recognition module 120 are illustrated. The optical fingerprint recognition module 120 can emit lights, which can be referred to as incident lights. The incident lights pass through an area of the touch display screen that is in contact with a finger, and then are reflected by patterns of the finger. Reflected lights are received by the optical fingerprint recognition module 120. According to the total reflection (also known as total internal reflection) principle, the optical fingerprint recognition module 120 can determine which incident lights are projected onto convex portions of a fingerprint (i.e., ridges of the fingerprint) and which incident lights are projected onto concave portions of the fingerprint (i.e., valleys of the fingerprint).

Referring to an enlarged dotted line area of FIG. 1a, in a surface of the touch display screen, the ridges of the fingerprint are in contact with the surface of the touch display screen, while the valleys of the fingerprint are not. On one hand, when incident lights generated by the optical fingerprint recognition module 120 are projected onto the valleys of the fingerprint, the incident lights are projected onto a surface of the touch display screen that is in contact with air. In this case, total reflection of the incident lights can be achieved by designing incident angles of the incident lights (a refractive index of the air is approximately equal to 1 and a refractive index of material of the touch display screen is greater than 1, accordingly, the refractive index of the material of the touch display screen is set to be greater than that of the air). In this way, the optical fingerprint recognition module 120 can receive strong total-reflected lights. On the other hand, when the incident lights generated by the optical fingerprint recognition module 120 are projected onto the ridges of the fingerprint, the incident lights are projected onto a surface of the touch display screen that is in contact with the convex portions of the fingerprint. In this situation, since the incident lights are projected onto the convex portions of the fingerprint, diffuse reflection occurs. As such, the optical fingerprint recognition module 120 can receive weak diffuse reflected lights. Therefore, the optical fingerprint recognition module 120 can obtain a fingerprint image according to received lights of different intensities.

FIG. 1b is a schematic structural diagram illustrating a mobile terminal according to an embodiment of the present disclosure. As illustrated in FIG. 1b, a mobile terminal 100 includes an application processor (AP) 101, a touch display screen 102, and an optical fingerprint recognition module 103. The optical fingerprint recognition module 103 has a fingerprint recognition area located in a first area of the touch display screen 102. The AP 101 is coupled with the touch display screen 102 and the optical fingerprint recognition module 103 via a bus 104.

The optical fingerprint recognition module 103 is configured to collect fingerprint data of a user when the touch display screen 102 detects a touch operation of the user in the first area and send the fingerprint data to the AP 101.

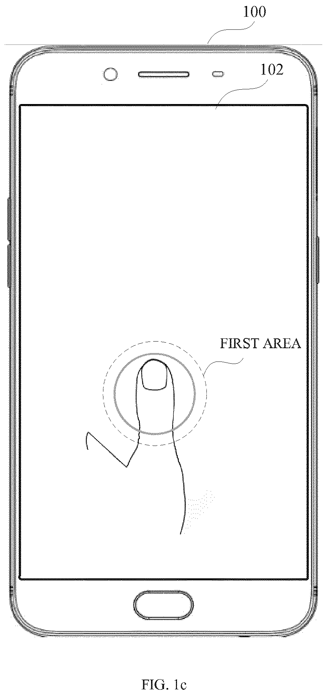

The first area may be any preset area of the touch display screen 102. The preset area may be located at any position of the touch display screen 102, such as, on the upper left side (as illustrated in FIG. 1c), the upper side, the lower side, the left side, and the right side of the touch display screen 102. The size of the preset area is able to be covered by the fingerprint area of the finger. The preset area may be any shape, such as, a circular shape, an elliptical shape, a quadrangular shape (e.g., a rectangular shape), a fingerprint-like shape, and so on, which is not limited herein.

The touch display screen 102 may be a thin film transistor-liquid crystal display (TFT-LCD), a light emitting diode (LED) display, an organic light-emitting diode (OLED) display, or the like.

The touch display screen 102 may include a touch screen and a display screen. The touch screen and the display screen are stacked, and the display screen is disposed on a bottom surface of the touch screen.

The AP 101 is configured to obtain repaired fingerprint data by denoising the fingerprint data according to pre-collected noise data, where the pre-collected noise data is collected in advance by the optical fingerprint recognition module 103 when there is no touch operation in the first area.

The pre-collected noise data may be collected in advance by the optical fingerprint recognition module 103 before the fingerprint data of the user is collected. The optical fingerprint recognition module 103 collects noise data in advance for processing when there is no touch operation in the first area. If the first area is covered with residual foreign material (e.g., a fingerprint mark), the result of the fingerprint data collected by the optical fingerprint recognition module 103 may be affected. Before comparison of fingerprint data, the fingerprint data collected is denoised and repaired to obtain the repaired fingerprint data closer to a real fingerprint.

The AP 101 is further configured to determine whether the repaired fingerprint data is matched with pre-stored fingerprint template data.

The AP 101 is further configured to determine that fingerprint verification passes when the repaired fingerprint data is matched with the pre-stored fingerprint template data.

Before comparison of fingerprint data, the AP 101 denoises and repairs the fingerprint data collected to obtain the repaired fingerprint data closer to a real fingerprint. The influence of the residual foreign material in the first area (fingerprint recognition area) of the touch display screen on the fingerprint data collected can be reduced, thereby facilitating the success of fingerprint matching.

The noise data includes *N* noise-data points, the fingerprint data includes *N* fingerprint-data points, and the *N* noise-data points are in one-to-one correspondence with the N fingerprint-data points. The AP 101 configured to obtain the repaired fingerprint data by denoising the fingerprint data according to the pre-collected noise data is configured to: obtain a first data difference between a first noise-data point and a first fingerprint-data point; and obtain a first repaired fingerprint-data point by repairing the first fingerprint-data point according to the first data difference, where the repaired fingerprint data includes N repaired fingerprint-data points, the first noise-data point is any one of the N noise-data points, the first fingerprint-data point is one of the N fingerprint-data points which corresponds to the first noise-data point, and *N* is an integer greater than or equal to 2.

The optical fingerprint recognition module 103 can collect N fingerprint-data points of the user upon detecting the touch operation of the user in the first area, and can also collect N noise-data points when there is no touch operation in the first area. The N noise-data points are in one-to-one correspondence with the N fingerprint-data points. The AP 101 is configured to obtain a first data difference between a first noise-data point of the N noise-data points and a first fingerprint-data point (where the first noise-data point corresponds to the first fingerprint-data point), and obtain a first repaired fingerprint-data point by repairing the first fingerprint-data point according to the first data difference. In one embodiment, the AP 101 configured to obtain the first repaired fingerprint-data point by repairing the first fingerprint-data point according to the first data difference is configured to: use the first data difference between the first noise-data point and the first fingerprint-data point as a value of the first repaired fingerprint-data point. For example, a value of the first noise-data point collected by the optical fingerprint recognition module 103 is 50, and a value of the first fingerprint-data point is 150, that is, the difference between the two is 100, 100 can be used as the value of the first repaired fingerprint-data point.

The AP 101 configured to obtain the first repaired fingerprint-data point by repairing the first fingerprint-data point according to the first data difference is configured to: determine whether the first data difference is greater than a preset threshold; use the first data difference as a value of the first repaired fingerprint-data point when the first data difference is greater than the preset threshold; or skip the repairing of the first fingerprint-data point when the first data difference is smaller than or equal to the preset threshold.

In general, when the optical fingerprint recognition module 103 collects fingerprint data at two times, there may be a slight difference between the fingerprint data points collected at the two times. If the first data difference is relatively large, it indicates that a first data point is greatly affected by noise or the first data point is data collected at convex portions of a fingerprint (i.e., ridges of the fingerprint), and therefore, the first data point needs to be repaired and the first data difference is used as the value of the first repaired fingerprint-data point. If the first data difference is relatively small, it indicates that the first data point is less affected by noise, and therefore, the first data point does not need to be repaired. The preset threshold can be set in advance, for example, the preset threshold can be set to be 5. The complexity of repairing fingerprint data can be reduced, and so the speed of fingerprint comparison can be improved.

The optical fingerprint recognition module 103 is further configured to periodically collect noise data when there is no touch operation in the first area.

The optical fingerprint recognition module 103 can periodically collect the noise data, for example, a period is 1 minute, 5 minutes, and like.

The AP 101 is further configured to obtain the periodically collected noise data from the optical fingerprint recognition module 103, and take most-recently-collected noise data as the pre-collected noise data.

Each time after obtaining new noise data from the optical fingerprint recognition module 103, the AP 101 overwrites previously obtained noise data with the new noise data to ensure that the last collected noise data is used each time the fingerprint data is repaired, which improves the accuracy of fingerprint repair.

The pre-collected noise data is any one of multiple noise data periodically collected by the optical fingerprint recognition module when there is no touch operation in the first area.

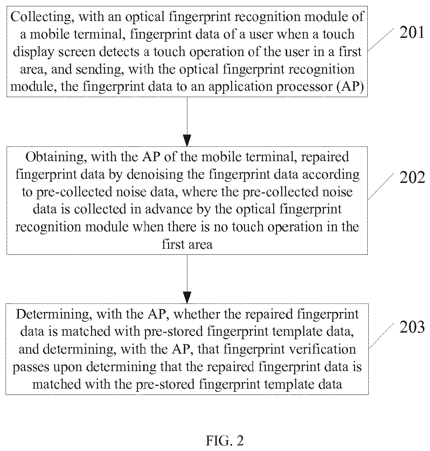

FIG. 2 is a schematic flowchart illustrating a method for optical fingerprint recognition according to the present disclosure. The method is applicable to a mobile terminal including an AP, a touch display screen, and an optical fingerprint recognition module. The optical fingerprint recognition module has a fingerprint recognition area corresponding to a first area of the touch display screen. As illustrated in FIG. 2, the method may include the following.

At 201, when the touch display screen detects a touch operation of a user in the first area, the mobile terminal collects, with the optical fingerprint recognition module, fingerprint data of the user, and sends, with the optical fingerprint recognition module, the fingerprint data to the AP.

At 202, the mobile terminal obtains, with the AP, repaired fingerprint data by denoising the fingerprint data according to pre-collected noise data, where the pre-collected noise data is collected in advance by the optical fingerprint recognition module when there is no touch operation in the first area.

At 203, the mobile terminal determines, with the AP, whether the repaired fingerprint data matches with pre-stored fingerprint template data; when the repaired fingerprint data matches with the pre-stored fingerprint template data, fingerprint verification is successful; when the repaired fingerprint data fails to match with the pre-stored fingerprint template data, the fingerprint verification fails. Fingerprint verification may be applicable to scenarios such as fingerprint unlocking and fingerprint payment.

Before comparison of fingerprint data, the AP denoises and repairs the fingerprint data collected to obtain the repaired fingerprint data closer to a real fingerprint. The influence of the residual foreign material in the first area (fingerprint recognition area) of the touch display screen on the fingerprint data collected can be reduced, thereby facilitating the success of fingerprint matching.

The noise data includes N noise-data points, the fingerprint data includes *N* fingerprint-data points, the *N* noise-data points are in one-to-one correspondence with the N fingerprint-data points, and the mobile terminal obtains, with the AP, the repaired fingerprint data by denoising the fingerprint data according to the pre-collected noise data as follows. The mobile terminal obtains, with the AP, a first data difference between a first noise-data point and a first fingerprint-data point. The mobile terminal obtains, with the AP, a first repaired fingerprint-data point by repairing the first fingerprint-data point according to the first data difference, where the repaired fingerprint data includes N repaired fingerprint-data points, the first noise-data point is any one of the N noise-data points, the first fingerprint-data point is one of the *N* fingerprint-data points which corresponds to the first noise-data point, and *N* is an integer greater than or equal to 2.

The mobile terminal obtains, with the AP, the first repaired fingerprint-data point by repairing the first fingerprint-data point according to the first data difference as follows. The mobile terminal determines, with the AP, whether the first data difference is greater than a preset threshold. Upon determining that the first data difference is greater than the preset threshold, the mobile terminal uses, with the AP, the first data difference as a value of the first repaired fingerprint-data point. Upon determining that the first data difference is smaller than or equal to the preset threshold, the mobile terminal skips, with the AP, the repairing of the first fingerprint-data point.

The complexity of repairing fingerprint data can be reduced, and so the speed of fingerprint comparison can be improved.

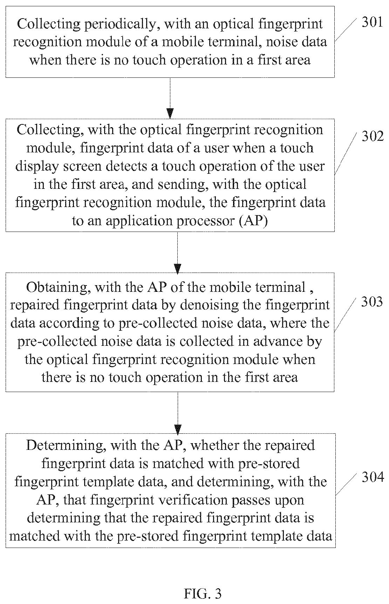

FIG. 3 is a schematic flowchart illustrating a method for optical fingerprint recognition according to the present disclosure. The method is applicable to a mobile terminal including an AP, a touch display screen, and an optical fingerprint recognition module. The projection of a fingerprint recognition area of the optical fingerprint recognition module falls on a first area of the touch display screen. As illustrated in FIG. 3, the method may include the following.

At 301, the mobile terminal collects, with the optical fingerprint recognition module, noise data periodically when there is no touch operation in the first area.

At 302, when the touch display screen detects a touch operation of a user in the first area, the mobile terminal collects, with the optical fingerprint recognition module, fingerprint data of the user and sends, with the optical fingerprint recognition module, the fingerprint data to the AP.

At 303, the mobile terminal obtains, with the AP, repaired fingerprint data by denoising the fingerprint data according to pre-collected noise data, where the pre-collected noise data is collected in advance by the optical fingerprint recognition module when there is no touch operation in the first area.

In one embodiment, the pre-collected noise data is any one of multiple noise data periodically collected by the optical fingerprint recognition module when there is no touch operation in the first area.

At 304, the mobile terminal determines, with the AP, whether the repaired fingerprint data is matched with pre-stored fingerprint template data; if the repaired fingerprint data is matched with the pre-stored fingerprint template data, fingerprint verification passes.

For details of the operations from 302 to 304, reference can be made to the operations from 201 to 203 described in conjunction with in FIG. 2, and it will not be repeated here.

Before comparison of fingerprint data, the noise data is periodically collected in advance. After the fingerprint data is collected, the AP denoises the fingerprint data collected according to the pre-collected noise data, repairs the fingerprint data collected, and obtains the repaired fingerprint data closer to a real fingerprint. The influence of the residual foreign material in the first area (fingerprint recognition area) of the touch display screen on the fingerprint data collected can be reduced, thereby improving success rate of fingerprint matching.

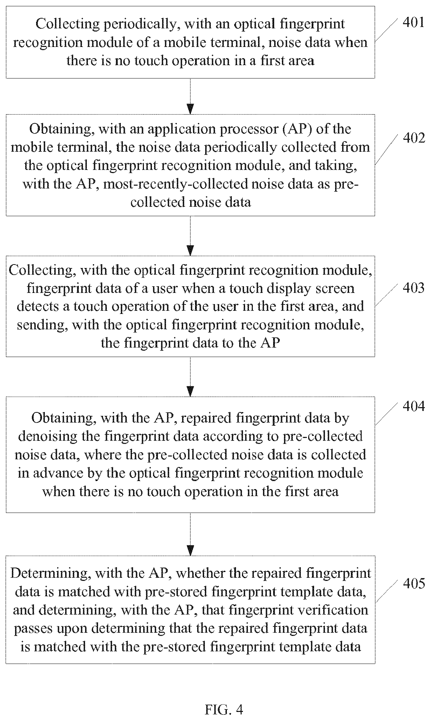

FIG. 4 is a schematic flowchart illustrating a method for optical fingerprint recognition according to another embodiment of the present disclosure. The method is applicable to a mobile terminal including an AP, a touch display screen, and an optical fingerprint recognition module. The optical fingerprint recognition module has a fingerprint recognition area located in a first area of the touch display screen. As illustrated in FIG. 4, the method may include the following.

At 401, the mobile terminal collects, with the optical fingerprint recognition module, noise data periodically when there is no touch operation in the first area.

At 402, the mobile terminal obtains, with the AP, the periodically collected noise data from the optical fingerprint recognition module, and takes, with the AP, most-recently-collected noise data as pre-collected noise data.

Each time after obtaining new noise data from the optical fingerprint recognition module 103, the AP overwrites previously obtained noise data with the new noise data to ensure that the fingerprint data is repaired using the last collected noise data every time, thereby improving the accuracy of fingerprint repair.

At 403, when the touch display screen detects a touch operation of a user in the first area, the mobile terminal collects, with the optical fingerprint recognition module, fingerprint data of the user, and sends, with the optical fingerprint recognition module, the fingerprint data to the AP.

At 404, the mobile terminal obtains, with the AP, repaired fingerprint data by denoising the fingerprint data according to the pre-collected noise data, where the pre-collected noise data is collected in advance by the optical fingerprint recognition module when there is no touch operation in the first area.

At 405, the mobile terminal determines, with the AP, whether the repaired fingerprint data is matched with pre-stored fingerprint template data, and determines, with the AP, that fingerprint verification passes upon determining that the repaired fingerprint data is matched with the pre-stored fingerprint template data.

For details of the operations from 402 to 405, reference can be made to the operations from 301 to 304 described in conjunction with in FIG. 3, and it will not be repeated here.

Before comparison of fingerprint data, the noise data is periodically collected in advance. After the fingerprint data is collected, the AP denoises the fingerprint data collected according to the latest collected noise data, repairs the fingerprint data collected, and obtains the repaired fingerprint data closer to a real fingerprint.
The influence of the residual foreign material in the first area (fingerprint recognition area) of the touch display screen on the fingerprint data collected can be reduced, thereby improving success rate of fingerprint matching.

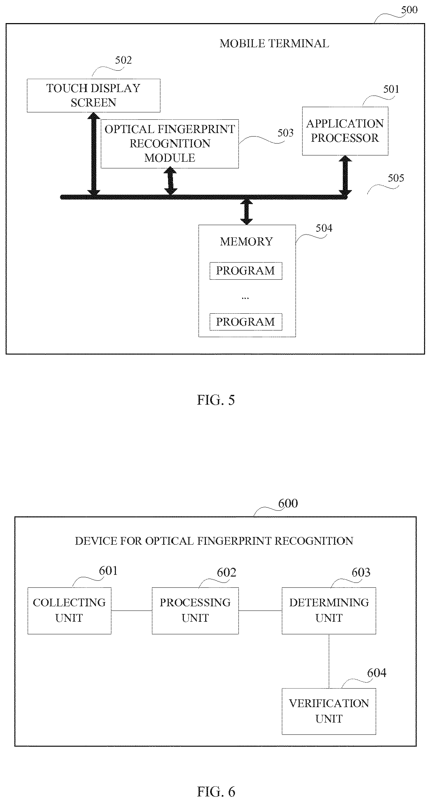

FIG. 5 is a schematic structural diagram illustrating a mobile terminal. As illustrated in FIG. 5, a mobile terminal 500 includes an AP 501, a touch display screen 502, an optical fingerprint recognition module 503, a memory 504, and one or more programs. The optical fingerprint recognition module has a fingerprint recognition area located in a first area of the touch display screen. The AP 501 is coupled with the touch display screen 502, the optical fingerprint recognition module 503, and the memory 504 via a data bus 505.

One or more programs are stored in the memory 504 and configured to be executed by the AP 501, the one or more programs include instructions configured to: collect fingerprint data of a user when the touch display screen 502 detects a touch operation of the user in the first area and send the fingerprint data to the AP 501; obtain repaired fingerprint data by denoising the fingerprint data according to pre-collected noise data, where the pre-collected noise data is collected in advance by the optical fingerprint recognition module 503 when there is no touch operation in the first area; and determine whether the repaired fingerprint data is matched with pre-stored fingerprint template data, and determine that fingerprint verification passes when the repaired fingerprint data is matched with the pre-stored fingerprint template data.

The noise data includes N noise-data points, the fingerprint data includes *N* fingerprint-data points, the *N* noise-data points are in one-to-one correspondence with the N fingerprint-data points, and the instructions of the one or more programs configured to obtain the repaired fingerprint data by denoising the fingerprint data according to the pre-collected noise data are configured to: obtain a first data difference between a first noise-data point and a first fingerprint-data point; and obtain a first repaired fingerprint-data point by repairing the first fingerprint-data point according to the first data difference, where the repaired fingerprint data includes N repaired fingerprint-data points, the first noise-data point is any one of the *N* noise-data points, the first fingerprint-data point is one of the *N* fingerprint-data points which corresponds to the first noise-data point, and *N* is an integer greater than or equal to 2.

The instructions of the one or more programs configured to obtain the first repaired fingerprint-data point by repairing the first fingerprint-data point according to the first data difference are configured to: determine whether the first data difference is greater than a preset threshold; use the first data difference as a value of the first repaired fingerprint-data point, when the first data difference is greater than the preset threshold; or skip the repairing of the first fingerprint-data point, when the first data difference is smaller than or equal to the preset threshold.

The one or more programs further include instructions configured to: collect periodically noise data when there is no touch operation in the first area.

The one or more programs further include instructions configured to: take most-recently-collected noise data as the pre-collected noise data, after collecting periodically the noise data when there is no touch operation in the first area.

The pre-collected noise data is any one of multiple noise data periodically collected by the optical fingerprint recognition module 503 when there is no touch operation in the first area.

Before comparison of fingerprint data, the AP denoises and repairs the fingerprint data collected to obtain the repaired fingerprint data closer to a real fingerprint. The influence of the residual foreign material in the first area (fingerprint recognition area) of the touch display screen on the fingerprint data collected can be reduced, thereby facilitating the success of fingerprint matching.

FIG. 6 is a schematic structural diagram illustrating a device for optical fingerprint recognition according to an embodiment of the present disclosure. A device 600 for optical fingerprint recognition is applicable to a mobile terminal including an AP, a touch display screen, and an optical fingerprint recognition module. The optical fingerprint recognition module has a fingerprint recognition area located in a first area of the touch display screen. As illustrated in FIG. 6, the device 600 includes a collecting unit 601, a processing unit 602, a determining unit 603, and a verification unit 604.

The collecting unit 601 is configured to control the optical fingerprint recognition module to collect fingerprint data of a user when the touch display screen detects a touch operation of the user in the first area and send the fingerprint data to the AP.

The processing unit 602 is configured to obtain, with the AP, repaired fingerprint data by denoising the fingerprint data according to pre-collected noise data, where the pre-collected noise data is collected in advance by the optical fingerprint recognition module when there is no touch operation in the first area.

The determining unit 603 is configured to determine, with the AP, whether the repaired fingerprint data is matched with pre-stored fingerprint template data.

The verification unit 604 is configured to determine that fingerprint verification passes when the determining unit 603 determines that the repaired fingerprint data is matched with the pre-stored fingerprint template data.

Before comparison of fingerprint data, the processing unit 602 is configured to denoise and repair the fingerprint data collected to obtain the repaired fingerprint data closer to a real fingerprint. The influence of the residual foreign material in the first area (fingerprint recognition area) of the touch display screen on the fingerprint data collected can be reduced, thereby facilitating the success of fingerprint matching.

The noise data includes N noise-data points, the fingerprint data includes *N* fingerprint-data points, the *N* noise-data points are in one-to-one correspondence with the N fingerprint-data points, and the processing unit 602 configured to obtain, with the AP, the repaired fingerprint data by denoising the fingerprint data according to the pre-collected noise data is configured to: obtain a first data difference between a first noise-data point and a first fingerprint-data point; and obtain a first repaired fingerprint-data point by repairing the first fingerprint-data point according to the first data difference, where the repaired fingerprint data includes *N* repaired fingerprint-data points, the first noise-data point is any one of the *N* noise-data points, the first fingerprint-data point is one of the N fingerprint-data points which corresponds to the first noise-data point, and N is an integer greater than or equal to 2.

The processing unit 602 configured to obtain, with the AP, the first repaired fingerprint-data point by repairing the first fingerprint-data point according to the first data difference is configured to: determine whether the first data difference is greater than a preset threshold; use the first data difference as a value of the first repaired fingerprint-data point, when the first data difference is greater than the preset threshold; or skip the repairing of the first fingerprint-data point, when the first data difference is smaller than or equal to the preset threshold.

The collecting unit 601 is further configured to periodically collect, with the optical fingerprint recognition module, noise data when there is no touch operation in the first area.

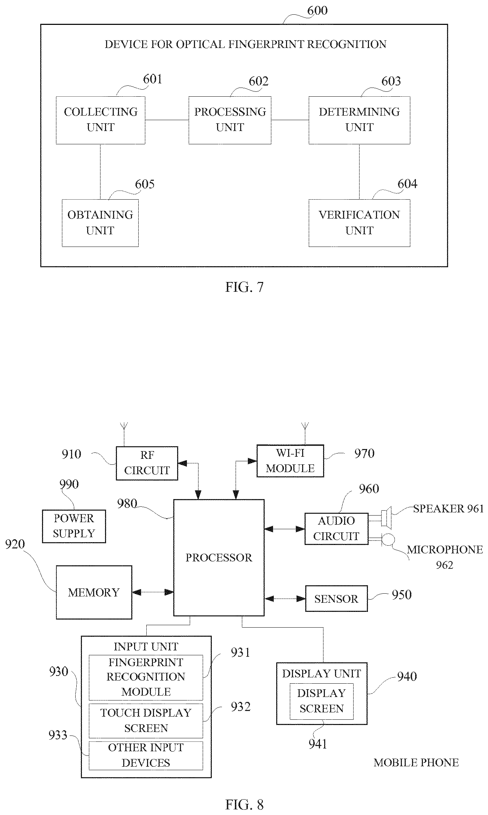

As illustrated in FIG. 7, the device 600 for optical fingerprint recognition further includes an obtaining unit 605. The obtaining unit 605 is configured to: obtain, with the AP, the periodically collected noise data from the optical fingerprint recognition module; and take, with the AP, most-recently-collected noise data as the pre-collected noise data.

The pre-collected noise data is any one of multiple noise data periodically collected by the optical fingerprint recognition module when there is no touch operation in the first area.

Before comparison of fingerprint data, the noise data can be periodically collected in advance. After the fingerprint data is collected, the fingerprint data collected is denoised according to the latest collected noise data, and fingerprint data collected is repaired, so as to obtain the repaired fingerprint data closer to a real fingerprint. The influence of the residual foreign material in the first area (fingerprint recognition area) of the touch display screen on the collected fingerprint data can be reduced, and so success rate of fingerprint matching can be improved.

The present disclosure further provide another mobile terminal. As illustrated in FIG. 8, only parts of the present disclosure are illustrated for ease of description. For technical details not described, reference may be made to the method of the present disclosure. The mobile terminal may be any terminal device, such as a mobile phone, a tablet computer, a personal digital assistant (PDA), a point of sale terminal (POS), an on-board computer and the like. The following describes a mobile phone as an example of the mobile terminal.

FIG. 8 is a block diagram of a part of a structure of a mobile phone related to a mobile terminal according to an embodiment of the present disclosure. As illustrated in FIG. 8, the mobile phone includes a radio frequency (RF) circuit 910, a memory 920, an input unit 930, a display unit 940, a sensor 950, an audio circuit 960, a wireless fidelity (Wi-Fi) module 970, a processor 980, a power supply 990, and other components. Those skilled in the art can understand that the structure of the mobile phone illustrated in FIG. 8 does not constitute any limitation on a mobile phone. The mobile phone configured to implement technical solutions of the present disclosure may include more or fewer components than illustrated, or may combine certain components, or may adopt different arrangements of components.

In the following, various components of the mobile phone will be described in detail with reference to FIG. 8.

The RF circuit 910 is configured to transmit or receive information. Generally, the RF circuit 910 includes but is not limited to an antenna, at least one amplifier, a transceiver, a coupler, a low noise amplifier (LNA), a duplexer, and the like. In addition, the RF circuit 910 may also communicate with the network and other devices via wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS), and so on.

The memory 920 is configured to store software programs and modules, and the processor 980 is configured to execute various function applications and data processing of the mobile phone by running the software programs and the modules stored in the memory 920. The memory 920 mainly includes a program storing region and a data storing region. The program storing region may store an operating system, application programs required for at least one function and so on. The data storing region may store data created according to use of the mobile phone, and so on. In addition, the memory 920 may include a high-speed random access memory (RAM), and may further include a non-transitory memory such as at least one disk storage device, a flash device, or other non-transitory solid storage devices.

The input unit 930 is configured to receive input digital or character information and generate key signal input associated with user setting and function control of the mobile phone. In one implementation, the input unit 930 may include a fingerprint recognition module 931 (e.g., an optical fingerprint recognition module), a touch display screen 932, and other input devices 933. The fingerprint recognition module 931 can collect fingerprint data of the user. In addition to the fingerprint recognition module 931, the input unit 930 may further include other input devices 933. In one implementation, other input devices 933 may include, but not limit to, one or more of a touch screen, a physical key, a function key (such as a volume control key, a switch key, etc.), a trackball, a mouse, a joystick, and the like.

The display unit 940 is configured to display information input by the user or information provided for the user or various menus of the mobile phone. The display unit 940 may include a display screen 941. In at least one implementation, the display screen 941 may be in the form of a liquid crystal display (LCD), an organic light-emitting diode (OLED), and so on. Although the fingerprint recognition module 931 and the display screen 941 are illustrated as two separate components in FIG. 8 to realize the input and output functions of the mobile phone, in some embodiments, the fingerprint recognition module 931 may be integrated with the display screen 941 to implement the input and output functions of the mobile phone.

The mobile phone may further include at least one sensor 950, such as, a light sensor, a motion sensor, and other sensors. In one implementation, the light sensor may include an ambient light sensor and a proximity sensor, the ambient light sensor may adjust the brightness of the display screen 941 according to ambient lights, and the proximity sensor may turn off the display screen 941 and/or backlight when the mobile phone reaches nearby the ear. As a kind of motion sensor, an accelerometer sensor can detect the magnitude of acceleration in all directions (typically three axes) and when the mobile phone is stationary, the accelerometer sensor can detect the magnitude and direction of gravity; the accelerometer sensor can also identify mobile-phone gestures related applications (such as vertical and horizontal screen switch, related games, magnetometer attitude calibration), or the accelerometer sensor can be used for vibration-recognition related functions (such as a pedometer, percussion) and so on. The mobile phone can also be equipped with a gyroscope, a barometer, a hygrometer, a thermometer, and an infrared sensor and other sensors, and it will not be repeated herein.

The audio circuit 960, a speaker 961, and a microphone 962 may provide an audio interface between the user and the mobile phone. The audio circuit 960 may convert the received audio data into electrical signals and transfer the electrical signals to the speaker 961; thereafter the speaker 961 converts the electrical signals into sound signals to output. On the other hand, the microphone 962 converts received sound signals into electrical signals, which will be received and converted into audio data by the audio circuit 960 to output. The audio data is then processed and transmitted by the processor 980 via the RF circuit 910 to another mobile phone for example, or, the audio data is output to the memory 920 for further processing.

Wi-Fi belongs to a short-range wireless transmission technology. With aid of the Wi-Fi module 970, the mobile phone may assist the user in E-mail receiving and sending, webpage browsing, access to streaming media and the like. Wi-Fi provides users with wireless broadband Internet access. Although the Wi-Fi module 970 is illustrated in FIG. 8, it should be understood that the Wi-Fi module 970 is not essential to the mobile phone and can be omitted according to actual needs without departing from the essential nature of the present disclosure.

The processor 980 is a control center of the mobile phone. It uses various interfaces and lines to connect various parts of the whole mobile phone, runs or executes software programs and/or modules stored in the memory 920, and calls data stored in the memory 920 to perform various functions of the mobile phone and process data, thereby monitoring the mobile phone. In at least one implementation, the processor 980 may include one or more processing units; for example, the processor 980 may integrate an application processor and a modem processor, where the application processor mainly handles the operating system, the user interface, the application programs, and so on, and the modem processor mainly processes wireless communication. It will be appreciated that the above-mentioned modem processor may not be integrated into the processor 980.

The mobile phone also includes the power supply 990 (e.g., a battery) that supplies power to various components. For instance, the power supply 990 may be logically connected to the processor 980 via a power management system to enable management of charging, discharging, and power consumption through the power management system.

Although not illustrated, the mobile phone may include a camera, a Bluetooth module, etc., and the present disclosure will not elaborate herein.

The present disclosure further provide a computer storage medium. The computer storage medium is configured to store computer programs for electronic data interchange, the computer programs are operable with a computer to execute part or all of the operations described in any of the method for optical fingerprint recognition described in the foregoing method embodiments.

The present disclosure further provide a computer program product. The computer program product includes a non-transitory computer readable storage medium which is configured to store computer programs, the computer programs are operable with a computer to execute part or all of the operations described in any of the method for optical fingerprint recognition described in the foregoing method.

## Claims

1. A method for optical fingerprint recognition, applicable to a mobile terminal comprising an application processor, AP, a touch display screen, and an optical fingerprint recognition module having a fingerprint recognition area located in a first area of the touch display screen, the method comprising:
collecting (201, 302, 403), with the optical fingerprint recognition module, fingerprint data of a user when the touch display screen detects a touch operation of the user in the first area, and sending, with the optical fingerprint recognition module, the fingerprint data to the AP;
obtaining (202, 303, 404), with the AP, repaired fingerprint data by denoising the fingerprint data according to pre-collected noise data, wherein the pre-collected noise data is collected in advance by the optical fingerprint recognition module when there is no touch operation in the first area;
determining (203, 304, 405), with the AP, whether the repaired fingerprint data is matched with pre-stored fingerprint template data, and determining, with the AP, that fingerprint verification passes upon determining that the repaired fingerprint data is matched with the pre-stored fingerprint template data;
the fingerprint data comprising N fingerprint-data points;
the pre-collected noise data comprising *N* noise-data points, and the *N* noise-data points being in one-to-one correspondence with the N fingerprint-data points;
the repaired fingerprint data comprising *N* denoised fingerprint-data points, *N* being an integer greater than or equal to 2; and
**characterized in that** obtaining, with the AP, the repaired fingerprint data by denoising the fingerprint data according to the pre-collected noise data comprises:
for each of the *N* noise-data points and each of the *N* fingerprint-data points:
obtaining a data difference between the noise-data point and the fingerprint-data point, the fingerprint-data point being one of the N fingerprint-data points which corresponds to the noise-data point; and
if the data difference is greater than a preset threshold, using the data difference as a value of a denoised fingerprint-data point, otherwise skipping the repairing of the fingerprint-data point, the denoised fingerprint-data point being one of the *N* denoised fingerprint-data points which corresponds to the fingerprint-data point and the noise-data point.

2. The method of claim 1, further comprising the following prior to collecting, with the optical fingerprint recognition module, the fingerprint data of the user:
collecting periodically (301, 401), with the optical fingerprint recognition module, noise data when there is no touch operation in the first area.

3. The method of claim 2, further comprising the following after collecting periodically, with the optical fingerprint recognition module, the noise data when there is no touch operation in the first area:
obtaining (402), with the AP, the noise data periodically collected from the optical fingerprint recognition module; and
taking (402), with the AP, most-recently-collected noise data as the pre-collected noise data.

4. The method of claim 2, wherein the pre-collected noise data is any one of multiple noise data periodically collected by the optical fingerprint recognition module when there is no touch operation in the first area.

5. A device (600) for optical fingerprint recognition, comprising an application processor, AP (101), a touch display screen (102), and an optical fingerprint recognition module (103) having a fingerprint recognition area located in a first area of the touch display screen;
the optical fingerprint recognition module being configured to collect fingerprint data of a user when the touch display screen detects a touch operation of the user in the first area and send the fingerprint data to the AP;
the AP being configured to obtain repaired fingerprint data by denoising the fingerprint data according to pre-collected noise data, wherein the pre-collected noise data is collected in advance by the optical fingerprint recognition module when there is no touch operation in the first area;
the AP being further configured to determine whether the repaired fingerprint data is matched with pre-stored fingerprint template data;
the AP being further configured to determine that fingerprint verification passes when the repaired fingerprint data is matched with the pre-stored fingerprint template data;
the fingerprint data comprising *N* fingerprint-data points;
the pre-collected noise data comprising *N* noise-data points, and the *N* noise-data points being in one-to-one correspondence with the N fingerprint-data points;
the repaired fingerprint data comprising *N* denoised fingerprint-data points, *N* being an integer greater than or equal to 2; and
**characterized in that** the AP configured to obtain the repaired fingerprint data by denoising the fingerprint data according to the pre-collected noise data is configured to:
for each of the *N* noise-data points and each of the *N* fingerprint-data points:
obtain a data difference between the noise-data point and the fingerprint-data point, the fingerprint-data point being one of the *N* fingerprint-data points which corresponds to the noise-data point; and
if the data difference is greater than a preset threshold, use the data difference as a value of a denoised fingerprint-data point, otherwise skip the repairing of the fingerprint-data point, the denoised fingerprint-data point being one of the *N* denoised fingerprint-data points which corresponds to the fingerprint-data point and the noise-data point.

6. The device of claim 5, wherein the optical fingerprint recognition module is further configured to periodically collect noise data when there is no touch operation in the first area.

7. The device of claim 6, wherein the AP is further configured to:
obtain the noise data periodically collected from the optical fingerprint recognition module; and
take most-recently-collected noise data as the pre-collected noise data.

8. The device of claim 6, wherein the pre-collected noise data is any one of multiple noise data periodically collected by the optical fingerprint recognition module when there is no touch operation in the first area.

9. A computer readable storage medium, configured to store computer programs for electronic data interchange, the computer programs being operable with a computer to execute the method of any of claims 1 to 4.

## Patentansprüche

1. Verfahren für eine optische Fingerabdruckerkennung, das in einem mobilen Endgerät anwendbar ist, das einen Anwendungsprozessor, AP, einen berührungsempfindlichen Anzeigebildschirm und ein optisches Fingerabdruckerkennungsmodul umfasst, das einen Fingerabdruckerkennungsbereich aufweist, der sich in einem ersten Bereich des berührungsempfindlichen Anzeigebildschirms befindet, wobei das Verfahren umfasst:
Sammeln (201, 302, 403), mit dem optischen Fingerabdruckerkennungsmodul, von Fingerabdruckdaten eines Benutzers, wenn der berührungsempfindliche Anzeigebildschirm eine Berührungsoperation des Benutzers in dem ersten Bereich erkennt, und Senden der Fingerabdruckdaten mit dem optischen Fingerabdruckerkennungsmodul zu dem AP;
Erhalten (202, 303, 404), mit dem AP, von reparierten Fingerabdruckdaten, indem die Fingerabdruckdaten gemäß zuvor gesammelten Rauschdaten entrauscht werden, wobei die zuvor gesammelten Rauschdaten im Vorhinein durch das optische Fingerabdruckerkennungsmodul gesammelt werden, wenn keine Berührungsoperation in dem ersten Bereich vorliegt;
Ermitteln (203, 304, 405), mit dem AP, ob die reparierten Fingerabdruckdaten mit zuvor gespeicherten Fingerabdruckvorlagedaten übereinstimmen, und Ermitteln, mit dem AP, dass die Fingerabdruckverifizierung bestanden wurde, sobald ermittelt wird, dass die reparierten Fingerabdruckdaten mit den zuvor gespeicherten Fingerabdruckvorlagedaten übereinstimmen;
wobei die Fingerabdruckdaten *N* Fingerabdruckdatenpunkte umfassen;
wobei die zuvor gesammelten Rauschdaten *N* Rauschdatenpunkte umfassen, und wobei die *N* Rauschdatenpunkte in einer Eins-zu-Eins-Entsprechung mit den *N* Fingerabdruckdatenpunkten stehen;
wobei die reparierten Fingerabdruckdaten *N* entrauschte Fingerabdruckdatenpunkte umfassen, wobei *N* eine ganze Zahl größer als oder gleich 2 ist; und
**dadurch gekennzeichnet, dass** das Erhalten, mit dem AP, der reparierten Fingerabdruckdaten, indem die Fingerabdruckdaten gemäß zuvor gesammelten Rauschdaten entrauscht werden, umfasst:
für jeden der *N* Rauschdatenpunkte und jeden der *N* Fingerabdruckdatenpunkte:
Erhalten einer Datendifferenz zwischen dem Rauschdatenpunkt und dem Fingerabdruckdatenpunkt, wobei der Fingerabdruckdatenpunkt einer der *N* Fingerabdruckdatenpunkte ist, der dem Rauschdatenpunkt entspricht; und
wenn die Datendifferenz größer als ein voreingestellter Schwellenwert ist, Verwenden der Datendifferenz als einen Wert eines entrauschten Fingerabdruckdatenpunkts, andernfalls Überspringen des Reparierens des Fingerabdruckdatenpunkts, wobei der entrauschte Fingerabdruckdatenpunkt einer der N entrauschten Fingerabdruckdatenpunkte ist, der dem Fingerabdruckdatenpunkt und dem Rauschdatenpunkt entspricht.

2. Verfahren nach Anspruch 1, das außerdem vor dem Sammeln, mit dem optischen Fingerabdruckerkennungsmodul, der Fingerabdruckdaten des Benutzers, den folgenden Schritt umfasst:
regelmäßiges Sammeln (301, 401), mit dem optischen Fingerabdruckerkennungsmodul, von Rauschdaten, wenn keine Berührungsoperation in dem ersten Bereich vorliegt.

3. Verfahren nach Anspruch 2, das außerdem nach dem regelmäßigen Sammeln, mit dem optischen Fingerabdruckerkennungsmodul, der Rauschdaten, wenn keine Berührungsoperation in dem ersten Bereich vorliegt, den folgenden Schritt umfasst:
Erhalten (402), mit dem AP, der Rauschdaten, die von dem optischen Fingerabdruckerkennungsmodul regelmäßig gesammelt werden; und
Übernehmen (402), mit dem AP, der zuletzt gesammelten Rauschdaten als die zuvor gesammelten Rauschdaten.

4. Verfahren nach Anspruch 2, wobei die zuvor gesammelten Rauschdaten beliebige von mehreren Rauschdaten sind, die durch das optische Fingerabdruckerkennungsmodul regelmäßig gesammelt werden, wenn keine Berührungsoperation in dem ersten Bereich vorliegt.

5. Vorrichtung (600) für eine optische Fingerabdruckerkennung, umfassend: einen Anwendungsprozessor, AP, (101), einen berührungsempfindlichen Anzeigebildschirm (102) und ein optisches Fingerabdruckerkennungsmodul (103), das einen Fingerabdruckerkennungsbereich aufweist, der sich in einem ersten Bereich des berührungsempfindlichen Anzeigebildschirms befindet;
wobei das optische Fingerabdruckerkennungsmodul konfiguriert ist zum Sammeln von Fingerabdruckdaten eines Benutzers, wenn der berührungsempfindliche Anzeigebildschirm eine Berührungsoperation des Benutzers in dem ersten Bereich erkennt, und Senden der Fingerabdruckdaten zu dem AP;
wobei der AP konfiguriert zum Erhalten von reparierten Fingerabdruckdaten, indem die Fingerabdruckdaten gemäß zuvor gesammelten Rauschdaten entrauscht werden, wobei die zuvor gesammelten Rauschdaten im Vorhinein durch das optische Fingerabdruckerkennungsmodul gesammelt werden, wenn keine Berührungsoperation in dem ersten Bereich vorliegt;
wobei der AP außerdem konfiguriert ist zum Ermitteln, ob die reparierten Fingerabdruckdaten mit zuvor gespeicherten Fingerabdruckvorlagedaten übereinstimmen;
wobei der AP außerdem konfiguriert ist zum Ermitteln, dass die Fingerabdruckverifizierung bestanden wurde, wenn die reparierten Fingerabdruckdaten mit den zuvor gespeicherten Fingerabdruckvorlagedaten übereinstimmen;
wobei die Fingerabdruckdaten *N* Fingerabdruckdatenpunkte umfassen;
wobei die zuvor gesammelten Rauschdaten *N* Rauschdatenpunkte umfassen, und wobei die *N* Rauschdatenpunkte in einer Eins-zu-Eins-Entsprechung mit den *N* Fingerabdruckdatenpunkten stehen;
wobei die reparierten Fingerabdruckdaten *N* entrauschte Fingerabdruckdatenpunkte umfassen, wobei *N* eine ganze Zahl größer als oder gleich 2 ist; und
**dadurch gekennzeichnet, dass** der AP konfiguriert ist zum Erhalten der reparierten Fingerabdruckdaten, indem die Fingerabdruckdaten gemäß zuvor gesammelten Rauschdaten entrauscht werden, und er konfiguriert ist zum:
für jeden der *N* Rauschdatenpunkte und jeden der *N* Fingerabdruckdatenpunkte:
Erhalten einer Datendifferenz zwischen dem Rauschdatenpunkt und dem Fingerabdruckdatenpunkt, wobei der Fingerabdruckdatenpunkt einer der *N* Fingerabdruckdatenpunkte ist, der dem Rauschdatenpunkt entspricht; und
wenn die Datendifferenz größer als ein voreingestellter Schwellenwert ist, Verwenden der Datendifferenz als einen Wert eines entrauschten Fingerabdruckdatenpunkts, andernfalls Überspringen des Reparierens des Fingerabdruckdatenpunkts, wobei der entrauschte Fingerabdruckdatenpunkt einer der *N* entrauschten Fingerabdruckdatenpunkte ist, der dem Fingerabdruckdatenpunkt und dem Rauschdatenpunkt entspricht.

6. Vorrichtung nach Anspruch 5, wobei das optische Fingerabdruckerkennungsmodul außerdem konfiguriert ist zum regelmäßigen Sammeln von Rauschdaten, wenn keine Berührungsoperation in dem ersten Bereich vorliegt.

7. Vorrichtung nach Anspruch 6, wobei der AP außerdem konfiguriert ist zum:
Erhalten der Rauschdaten, die von dem optischen Fingerabdruckerkennungsmodul regelmäßig gesammelt werden; und
Übernehmen der zuletzt gesammelten Rauschdaten als die zuvor gesammelten Rauschdaten.

8. Vorrichtung nach Anspruch 6, wobei die zuvor gesammelten Rauschdaten beliebige von mehreren Rauschdaten sind, die durch das optische Fingerabdruckerkennungsmodul regelmäßig gesammelt werden, wenn keine Berührungsoperation in dem ersten Bereich vorliegt.

9. Computerlesbares Speichermedium, das konfiguriert ist zum Speichern von Computerprogrammen für einen elektronischen Datenaustausch, wobei die Computerprogramme mit einem Computer funktionsfähig sind, um das Verfahren nach einem der Ansprüche 1 bis 4 auszuführen.

## Revendications

1. Procédé de reconnaissance optique d'empreintes digitales, applicable à un terminal mobile comprenant un processeur d'application, AP, un écran d'affichage tactile, et un module de reconnaissance optique d'empreintes digitales ayant une zone de reconnaissance d'empreintes digitales située dans une première zone de l'écran d'affichage tactile, le procédé comprenant :
la collecte (201, 302, 403), avec le module de reconnaissance optique d'empreintes digitales, de données d'empreintes digitales d'un utilisateur lorsque l'écran d'affichage tactile détecte une opération tactile de l'utilisateur dans la première zone, et l'envoi, avec le module de reconnaissance optique d'empreintes digitales, des données d'empreintes digitales à l'AP ;
l'obtention (202, 303, 404), avec l'AP, de données d'empreintes digitales réparées par débruitage des données d'empreintes digitales en fonction de données de bruit pré-collectées, les données de bruit pré-collectées étant collectées à l'avance par le module de reconnaissance optique d'empreintes digitales lorsqu'il n'y a pas d'opération tactile dans la première zone ;
la détermination (203, 304, 405), avec l'AP, si les données d'empreintes digitales réparées correspondent aux données de modèle d'empreintes digitales préenregistrées, et la détermination, avec l'AP, que la vérification des empreintes digitales est réussie lorsqu'il est établi que les données d'empreintes digitales réparées correspondent aux données de modèle d'empreintes digitales préenregistrées ;
les données d'empreintes digitales comprenant *N* points de données d'empreintes digitales ;
les données de bruit pré-collectées comprenant *N* points de données de bruit, les *N* points de données de bruit étant en correspondance biunivoque avec les *N* points de données d'empreintes digitales ;
les données d'empreintes digitales réparées comprenant *N* points de données d'empreintes digitales débruitées, *N* étant un nombre entier supérieur ou égal à 2 ; et
**caractérisé en ce que** l'obtention, avec l'AP, des données d'empreintes digitales réparées par débruitage des données d'empreintes digitales en fonction des données de bruit pré-collectées comprend :
pour chacun des *N* points de données de bruit et chacun des N points de données d'empreintes digitales :
l'obtention d'une différence de données entre le point de données de bruit et le point de données d'empreintes digitales, le point de données d'empreintes digitales étant l'un des *N* points de données d'empreintes digitales correspondant au point de données de bruit ; et
si la différence de données est supérieure à un seuil prédéfini, l'utilisation de la différence de données comme valeur d'un point de données d'empreintes digitales débruité, sinon le fait d'ignorer la réparation du point de données d'empreintes digitales, le point de données d'empreintes digitales débruité étant l'un des N points de données d'empreintes digitales débruités correspondant au point de données d'empreintes digitales et au point de données de bruit.

2. Procédé selon la revendication 1, comprenant en outre ce qui suit avant de collecter, avec le module de reconnaissance optique d'empreintes digitales, les données d'empreintes digitales de l'utilisateur :
la collecte périodiquement (301, 401), à l'aide du module de reconnaissance optique d'empreintes digitales, de données de bruit lorsqu'il n'y a pas d'opération tactile dans la première zone.

3. Procédé selon la revendication 2, comprenant en outre ce qui suit après avoir collecté périodiquement, avec le module de reconnaissance optique d'empreintes digitales, les données de bruit lorsqu'il n'y a pas d'opération tactile dans la première zone :
l'obtention (402), avec l'AP, des données de bruit collectées périodiquement par le module de reconnaissance optique d'empreintes digitales ; et
la prise (402), avec l'AP, des données de bruit collectées le plus récemment comme données de bruit pré-collectées.

4. Procédé selon la revendication 2, les données de bruit pré-collectées étant l'une quelconque des multiples données de bruit collectées périodiquement par le module de reconnaissance optique d'empreintes digitales lorsqu'il n'y a pas d'opération tactile dans la première zone.

5. Dispositif (600) pour la reconnaissance optique d'empreintes digitales, comprenant un processeur d'application, AP (101), un écran d'affichage tactile (102) et un module de reconnaissance optique d'empreintes digitales (103) ayant une zone de reconnaissance d'empreintes digitales située dans une première zone de l'écran d'affichage tactile ;
le module de reconnaissance optique d'empreintes digitales étant configuré pour collecter les données d'empreintes digitales d'un utilisateur lorsque l'écran d'affichage tactile détecte une opération tactile de l'utilisateur dans la première zone et pour envoyer les données d'empreintes digitales à l'AP ;
l'AP étant configuré pour obtenir des données d'empreintes digitales réparées par débruitage des données d'empreintes digitales en fonction de données de bruit pré-collectées, les données de bruit pré-collectées étant collectées à l'avance par le module de reconnaissance optique d'empreintes digitales lorsqu'il n'y a pas d'opération tactile dans la première zone ;
l'AP étant en outre configuré pour déterminer si les données d'empreintes digitales réparées correspondent aux données de modèle d'empreintes digitales préenregistrées ;
l'AP étant en outre configuré pour déterminer que la vérification des empreintes digitales est réussie lorsque les données d'empreintes digitales réparées correspondent aux données de modèle d'empreintes digitales préenregistrées ;
les données d'empreintes digitales comprenant N points de données d'empreintes digitales ;
les données de bruit pré-collectées comprenant N points de données de bruit, et les N points de données de bruit étant en correspondance biunivoque avec les N points de données d'empreintes digitales ;
les données d'empreintes digitales réparées comprenant N points de données d'empreintes digitales débruitées, N étant un nombre entier supérieur ou égal à 2 ; et
**caractérisé en ce que** l'AP configuré pour obtenir les données d'empreintes digitales réparées par débruitage des données d'empreintes digitales en fonction des données de bruit pré-collectées est configuré pour :
pour chacun des N points de données de bruit et chacun des N points de données d'empreintes digitales :
obtenir une différence de données entre le point de données de bruit et le point de données d'empreintes digitales, le point de données d'empreintes digitales étant l'un des *N* points de données d'empreintes digitales correspondant au point de données de bruit ; et
si la différence de données est supérieure à un seuil prédéfini, utiliser la différence de données comme valeur d'un point de données d'empreintes digitales débruité, sinon ignorer la réparation du point de données d'empreintes digitales, le point de données d'empreintes digitales débruité étant l'un des *N* points de données d'empreintes digitales débruités correspondant au point de données d'empreintes digitales et au point de données de bruit.

6. Dispositif selon la revendication 5, le module de reconnaissance optique d'empreintes digitales étant en outre configuré pour collecter périodiquement des données de bruit lorsqu'il n'y a pas d'opération tactile dans la première zone.

7. Dispositif selon la revendication 6, l'AP étant en outre configuré pour :
obtenir les données de bruit collectées périodiquement par le module de reconnaissance optique d'empreintes digitales ; et
prendre les données de bruit les plus récemment collectées comme données de bruit pré-collectées.

8. Dispositif selon la revendication 6, les données de bruit pré-collectées étant l'une quelconque des multiples données de bruit collectées périodiquement par le module de reconnaissance optique d'empreintes digitales lorsqu'il n'y a pas d'opération tactile dans la première zone.

9. Support de stockage lisible par ordinateur, configuré pour stocker des programmes informatiques pour l'échange de données électroniques, les programmes informatiques étant utilisables avec un ordinateur pour exécuter le procédé selon l'une quelconque des revendications 1 à 4.
